# EUROPEAN PATENT APPLICATION

(11) **EP 3 686 854 A1**
(43) Date of publication of application: **29.07.2020**
(21) Application number: 18859202.6
(22) Date of filing: 03.08.2018
(51) Int. Cl.: G07F 17/00

(54) **INTERNET OF THINGS-BASED SHARED BICYCLE PARKING MANAGEMENT SYSTEM AND METHOD**

(30) Priority: 21.09.2017 CN 201710859594
(71) Applicant: Guangzhou Mingxi Network Technology Co., Ltd., Guangzhou, Guangdong 510530 (CN)
(72) Inventor: ZHANG, Jianguo, Guangdong 510530 (CN)
(74) Representative: HGF
(86) International application number: PCT/CN2018/098417
(87) International publication number: WO 2019/056867

(57) **Abstract**

Disclosed is a shared bicycle parking management system and method based on Internet of Things. The system includes a back end control system, a user mobile phone control system, and a plurality of locking and parking apparatuses, each of which is provided with at least one dock with built-in lock. The dock with built-in lock includes a dock body, a locking device installed on the dock body, a locking device identification code adhered to the dock body, and a main control circuit board and a first short-range wireless communication module that are arranged in the dock body, where the locking device and the first short-range wireless communication module are both coupled to the main control circuit board, and the back end control system is coupled to the user mobile phone control system via wireless communication. The present invention may realize automatic renting and returning of the bicycle on the locking and parking apparatus, avoiding the situation where the user randomly parks the bicycle when returning it. This method may realize the orderly and safe parking of the shared bicycles, as well as efficient and convenient monitoring and supervising of the shared bicycles, with a low management cost. Thus, this method may be widely used in shared bicycles management industry.

## Description

### TECHNICAL FIELD

This invention relates to the field of bicycle control based on Internet of Things, and in particular, relates to a shared bicycle parking management system and method based on the Internet of Things.

### BACKGROUND

Narrow Band Internet of Things (NB-IoT for short) based on an cellular networks is an emerging technology in the IoT field, which supports cellular data connection of low-power devices in wide area network, and so the NB-IoT is also called low-power wide area network, and it has advantages of long standby times and a long service life.

Conventional shared bicycles are managed by arranging bicycle dockings, which means after arranging a bicycle docking at a fixed position, a rental card is used to scan a reader on the bicycle docking, such that the operation of returning or renting the bicycle is achieved after the user card is successfully read. This method is restricted by the structure of the conventional bicycle docking, and is therefore extremely inconvenient to operate and has a low efficiency. Furthermore, the user needs to apply for an additional rental card, which not only increases the cost, but also requires the user to carry the rental card around, which is extremely inconvenient. Shared bicycles based on time-sharing rental, represented by Mobike and ofo, which are generally referred to as dockless bicycles, do not need to arrange bicycle dockings, which could realize bicycle sharing on-demand, stop-and-lock on-demand, providing great convenience for cyclists. However, this method does not have any restriction on the parking position, which separates ways from the unified parking and management of the fixed bicycle dockings, the following situations usually occur with the parking of the shared bicycles, including random parking, occupation of sidewalks, motorway, tunnels or overpasses, so that more human supervision costs are needed instead. In addition, there have been cases of "private use of public bicycles" in in which a personal lock is added to a shared bicycle, a shared bicycle is rode into a community or moved into a house. In some extreme cases, a shared bicycle may be stolen and the ID number of a shared bicycle is cracked.

### SUMMARY

To solve the above-mentioned problems, an object of the present invention is to provide a shared bicycle parking management system and method based on Internet of Things.

A technical solution adopted by the present invention to solve the technical problems is as follows.

There is provided a shared bicycle parking management system based on Internet of Things, including a back end control system, a user mobile phone control system, and a plurality of locking and parking apparatuses, each of which is provided with at least one dock with built-in lock, where the dock with built-in lock includes a dock body, a locking device installed on the dock body, a locking device identification code adhered to the dock body, and a main control circuit board and a first short-range wireless communication module that are provided in the dock body, where the locking device and the first short-range wireless communication module are both coupled to the main control circuit board, the back end control system is coupled to the user mobile phone control system via wireless communication, and the user mobile phone control system is associated with a third-party shared bicycle platform.

The user mobile phone control system is configured to scan the locking device identification code to obtain corresponding identification code data and further send the identification code data to the back end control system.

Each of the plurality of locking and parking apparatuses is configured to perform a corresponding locking or unlocking action when a user returns or rents a bicycle, and configured to generate corresponding transaction data indicative of the returning or renting of the bicycle, the transaction data comprising transaction times, bicycle tag data, and a status of the locking device.

The back end control system is configured for authenticating the user mobile phone control system, and is further configured for billing based on transaction data generated when the user returns and rents the bicycle, and is further configured to send the billing data to the third-party shared bicycle platform associated with the user mobile phone control system, so as to charge the third-party shared bicycle platform.

Further, the shared bicycle parking management system further includes a radio frequency tag arranged on a user bicycle and a radio frequency identification module arranged on the dock body, where the radio frequency identification module is coupled to the main control circuit board, the each of the plurality of locking and parking apparatuses is further provided with a node computer, which is provided with a Narrow Band Internet of Things(NB-IoT) chip and a second short-range wireless communication module, where the node computer communicates with the back end control system via the NB-IoT chip, and is wirelessly connected to the first short-range wireless communication module via the second short-range wireless communication module, achieving its connection with the main control circuit board of each dock with built-in lock of the locking and parking apparatus.

Further, the first short-range wireless communication module and the second short-range wireless communication module are each implemented as a Bluetooth communication module, the radio frequency tag is implemented as a radio frequency identification (RFID) tag, and the radio frequency identification module is implemented as an RFID identifier.

Another technical solution adopted by the present invention to solve the technical problems is as follows.

There is further provided a shared bicycle parking management method based on the Internet of Things includes the following operations:
in step S1, the user mobile phone control system scans a locking device identification code to obtain corresponding identification code data and sends the identification code data to a back end control system;
in step S2, the user mobile phone control system is authenticated by the back end control system, and after it is successfully authenticated, a corresponding locking device locking or unlocking instruction is generated;
in step S3, the locking and parking apparatus performs a corresponding locking or unlocking action in accordance with the locking device locking or unlocking instruction, realizing the returning or renting of the bicycle by the user and generates corresponding transaction data indicative of the returning or renting of the bicycle, where the transaction data includes transaction times, and a status of the locking device; and
in step S4, the back end control system performs a billing operation based on the transaction data which is generated when the user returns and rents the bicycle, and sends the billing data to the third-party shared bicycle platform associated with the user mobile phone control system, so as to charge the third-party shared bicycle platform.

Further, the step S102 specifically includes steps described below:
in step S21, the user mobile phone control system wakes up the dock with built-in lock via short-range wireless communication;
in step S22, the dock with built-in lock sends the status parameters of the dock with built-in lock to the user mobile phone control system via the first short-range wireless communication module;
in step S23, after analyzing the status parameters of the dock with built-in lock to obtain the status of the dock with built-in lock, the user mobile phone control system displays the executable operations to the user, then generates corresponding operation request information based on the status parameters of the dock with built-in lock and the user-input operation data and further sends the operation request information to the back end control system; and
in step S24, the back end control system authenticates the user mobile phone control system based on the operation request information, where after the user mobile phone control system is successfully authenticated, the back end control system generates a corresponding locking device locking or unlocking instruction, and sends the locking device locking or unlocking instruction to the corresponding dock with built-in lock via the user mobile phone control system;
where the status parameters of the dock with built-in lock include the status of the locking device and a status of use; and
in the step S3, the transaction data is forwarded to the back end control system via the user mobile phone control system.

Further, the method further includes step S5 subsequent to the step S4.
in step S5, the third-party shared bicycle platform performs a corresponding billing operation on the user mobile phone control system in accordance with the billing data sent by the back end control system.

Further, in the step S4, the back end control system specifically calculates a total length of of time during which the bicycle is rented by the user based on the transaction times in the transaction data when the user returns the bicycle and rents the bicycle, then performs the billing operation.

Further, in step S1, the user may return or rent the bicycle from any dock with built-in lock.

Still another technical solution adopted by the present invention to solve the technical problems is described below.

There is further provided a bicycle parking management method based on the Internet of Things which includes steps described below:
in step S1, the user mobile phone control system scans a locking device identification code to obtain corresponding identification code data and sends the identification code data to a back end control system;
in step S2, the user mobile phone control system is authenticated by the back end control system, and after the user mobile phone control system is successfully authenticated, a the back end control system generates a corresponding locking device unlocking instruction;
in step S3, the locking and parking apparatus performs a corresponding unlocking action in accordance with the locking device unlocking instruction, realizing the renting of the bicycle by the user and generates corresponding transaction data indicative of the renting of the bicycle;
in step S4, the locking and parking apparatus performs a corresponding locking action when the user returns the bicycle, and generates corresponding transaction data indicative of the returning of the bicycle; and
in step S5, the back end control system performs a billing operation according to transaction data generated when the user returns and rents the bicycle, and sends the billing data to the third-party shared bicycle platform associated with the user mobile phone control system, so as to charge the third-party shared bicycle platform;
where transaction data includes transaction times, bicycle tag data, and the status of the locking device.

Further, the step S102 specifically includes the following steps:
in step S21, the user mobile phone control system wakes up the dock with built-in lock via short-range wireless communication;
in step S22, the dock with built-in lock determines whether the first short-range wireless communication module is successfully paired with the user mobile phone control system, where if the first short-range wireless communication module is successfully paired with the user mobile phone control system, status parameters of the dock with built-in lock are directly sent to the user mobile phone control system, then step S25 is turned to and performed; and if the first short-range wireless communication module fails to be paired with the user mobile phone control system, step S23 is turned to and performed;
in step S23, after the dock with built-in lock wakes up the node computer via a short-range wireless communication method, the node computer builds up a connection with the back end control system via a Narrow Band Internet of Things (NB-IoT) communication method, then obtain the status parameters of the dock with built-in lock and forwards the status parameters of the dock with built-in lock in real time;
in step S24, after obtaining the status parameters of the dock with built-in lock forwarded by the node computer, the back end control system forwards the status parameters of the dock with built-in lock to the corresponding user mobile phone control system;
in step S25, after analyzing the status parameters of the dock with built-in lock to obtain the status of the dock with built-in lock, the user mobile phone control system displays the executable operations to the user, then further generates corresponding operation request information based on the status parameters of the dock with built-in lock and the user-input operation data and further sends the operation request information to the back end control system; and
in step S26, the back end control system authenticates the user mobile phone control system based on the operation request information, where after the user mobile phone control system is successfully authenticated, the back end control system generates a corresponding locking device unlocking instruction and sends the locking device unlocking instruction to the dock with built-in lock;
where the status parameters of the dock with built-in lock includes the status of the locking device, a status of use, and bicycle tag data.

Further, in the step S4, the generated transaction data indicative of the returning of the bicycle is sent to the back end control system in the following manner:
after waking up the node computer via short-range wireless communication, the dock with built-in lock sends the transaction data to the node computer for buffering, and after determining that an amount of buffered data has reached a preset number N, the node computer sends the buffered transaction data to the back end control system via the NB-IoT communication method;
in the step S3, the generated transaction data indicative of the renting of the bicycle is sent to the back end control system in the following manner:
   in response to the dock with built-in lock determining that the first short-range wireless communication module is successfully paired with the user mobile phone control system, the transaction data is forwarded to the back end control system in real time via the successfully paired user mobile phone control system; and
   in response to a condition of the dock with built-in lock determining that the first short-range wireless communication module fails to be paired with the user mobile phone control system, the transaction data is sent to the node computer for buffering, and the node computer forwards the buffered transaction data to the back end control system in real time via the NB-IoT communication method.

Further, in the step S5, the back end control system specifically calculates the total length of time during which the bicycle is rented by the user based on the transaction times in the transaction data generated when the user returns the bicycle and rents the bicycle, and then performs the billing operation.

Further, the method further includes step S6 subsequent to the step S5.
in step S6, the third-party shared bicycle platform performs a corresponding billing operation on the user mobile phone control system in accordance with the billing data sent by the back end control system.

The prevent invention provides the following beneficial effects. By providing a locking and parking apparatus, and arranging the locking and parking apparatus in various places that are planned and approved by the government, a third-party shared bicycle platform may park its shared bicycles on multiple dock with built-in locks. Therefore, the automatic renting and returning of the bicycle on the locking and parking apparatus may be realized, avoiding the situation in which the user randomly parks the bicycle when returning it. This method may realize orderly and safe parking of the shared bicycles, as well as efficient and convenient monitoring and supervising of the shared bicycles, with a low management cost.

### BRIEF DESCRIPTION OF DRAWINGS

FIG. 1 is an electronic block diagram of a first embodiment of a shared bicycle management system based on Internet of Things in accordance with the present invention.
FIG. 2 is an electronic block diagram of a second embodiment of a shared bicycle management system based on Internet of Things in accordance with the present invention.
FIG. 3 is a flowchart illustrating a specific Embodiment one of a shared bicycle management system based on Internet of Things in accordance with the present invention.
FIG. 4 is a flowchart illustrating a specific Embodiment two of the shared bicycle management system based on the Internet of Things in accordance with the present invention.

### DETAILED DESCRIPTION

### Embodiment one

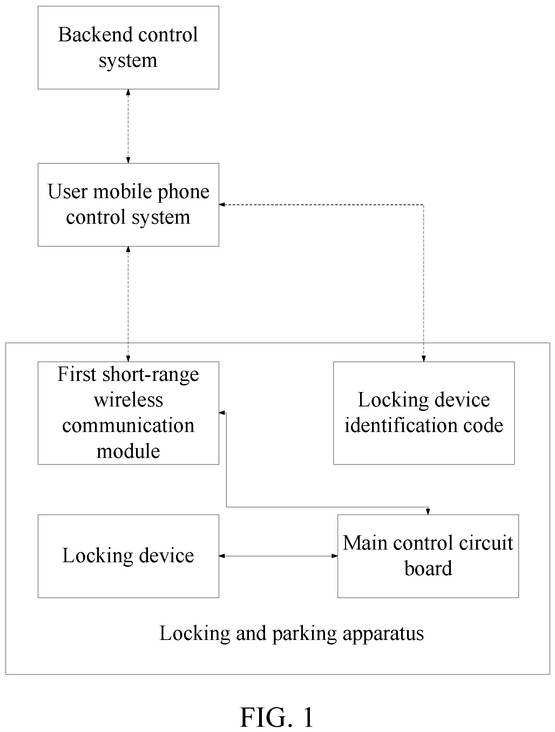

Referring to FIG. 1, there is illustrated a shared bicycle parking management system based on Internet of Things, which includes a back end control system, a user mobile phone control system, and a plurality of locking and parking apparatuses, each of which is provided with at least one dock with built-in lock. The dock with built-in lock includes a dock body, a locking device installed on the dock body, a locking device identification code adhered to the dock body, and a main control circuit board and a first short-range wireless communication module that are provided in the dock body, where the locking device and the first short-range wireless communication module are both coupled to the main control circuit board, the back end control system is coupled to the user mobile phone control system via wireless communication, and the user mobile phone control system is associated with a third-party shared bicycle platform.

The user mobile phone control system is configured to scan the locking device identification code to obtain corresponding identification code data and send the identification code data to the back end system.

Each of the plurality of locking and parking apparatuses is configured to perform a corresponding locking/unlocking action when a user returns/rents a bicycle, and generate corresponding transaction data indicative of the returning/renting of the bicycle, the transaction data including transaction times, bicycle tag data, and a status of the locking device.

The back end control system is configured for authenticating the user mobile phone control system, and is further configured for billing based on the transaction data that is generated when the user returns and rents the bicycle, and is further configured to send the billing data to the third-party shared bicycle platform associated with the user mobile phone control system, so as to charge the third-party shared bicycle platform.

Further as a typical embodiment, the first short-range wireless communication module is implemented as a Bluetooth communication module.

The present system provides the locking and parking apparatus, and by arranging the locking and parking apparatus in various places that are planned and approved by the government, the third-party shared bicycle platform may park its shared bicycles on multiple dock with built-in locks. Therefore, the automatic renting and returning of the bicycle on the locking and parking apparatus may be realized, avoiding the situation in which the bicycle is randomly parked by the user when returned. This method may realize orderly and safe parking of the shared bicycles, and as well as efficient and convenient monitoring and supervising of the shared bicycles, with a low management cost.

### Embodiment two

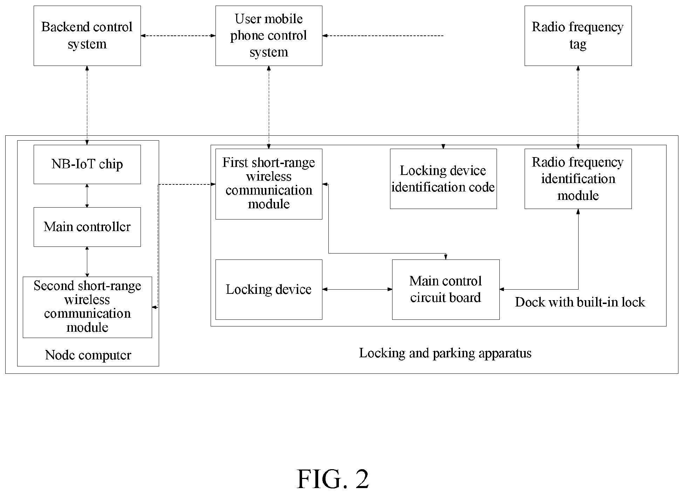

Referring now to FIG. 2, the present embodiment is further refined based on Embodiment one, and on the basis of Embodiment one, the shared bicycle parking management system further includes a radio frequency tag arranged on the user bicycle and a radio frequency identification module arranged on the dock body, where the radio frequency identification module is coupled to the main control circuit board, each of the plurality of locking and parking apparatuses is further provided with a node computer, which is provided with a Narrow Band Internet of Things(NB-IoT) chip and a second short-range wireless communication module, where the node computer is coupled to the back end control system via the NB-IoT chip, and is wirelessly connected to the first short-range wireless communication module via the second short-range wireless communication module, realizing its connection with the main control circuit board of each dock with built-in lock of the locking and parking apparatus. In the present embodiment, after the radio frequency tag is arranged on the user bicycle, the user does not need to scan the locking device identification code via the user mobile phone control system when returning the bicycle, and the bicycle may be returned by pushing the bicycle directly onto the dock with built-in lock. In FIG. 2, the node computer is further provided with a main controller configured for data processing control, where the main controller is coupled to the NB-IoT chip and to the second short-range wireless communication module, so as to control the operation of the NB-IoT chip and the second short-range wireless communication module.

Further, the first short-range wireless communication module and the second short-range wireless communication module are each implemented as a Bluetooth communication module, the radio frequency tag is implemented as a radio frequency identification (RFID) tag, and the radio frequency identification module is implemented as an RFID identifier.

The node computer is used as a backup operating device when the user mobile phone control system fails to be paired with the dock with built-in lock for short-range communication. After the node computer is waked up via the dock with built-in lock, the node computer starts the NB-IoT chip and other components to enter a working state. Therefore, after it is coupled to the back end control system via the NB-IoT chip, a direct data transmission channel is established between the dock with built-in lock and the back end control system without going through the user mobile phone, so that the dock with built-in lock may directly interact data with the back end control system. When successfully authenticating the user, the back end control system receives and sends the locking / unlocking instruction regarding the locking device that is generated by the back end control system to the main control circuit board, so as to make the main control circuit board perform the corresponding locking / unlocking action. BY arranging the node computer, the situation that some user mobile phones cannot be paired with the dock with built-in lock via short-range communication such as Bluetooth may be avoided, multiple ways of bicycle rental may be realized, improving the stability of the system.

The data transmission method of the node computer is described below.

In the process of renting the bicycle, after waked up by the dock with built-in lock, the node computer establishes a connection with the dock with built-in lock, and buffers the status parameters of the dock with built-in lock sent by the lock post. Meanwhile, the node computer sends the buffered status parameters of the dock with built-in lock and transaction data generated by the successful renting of the bicycle to the back end control system in real time, resulting in timely data transmission, and the data transmission may be performed in time to achieve unlocking. In the process of transmitting the transaction data that is generated when the bicycle is returned, after waked up by the dock with built-in lock, the node computer establishes a connection with the dock with built-in lock, and buffers the data sent by the dock with built-in lock, then after determining that a number of buffered data reaches a preset number N, the node computer connects to the back end control system via the NB-IoT communication method, and sends the number of N buffered data together to the back end control system. When the user returns the bicycle, the node computer of the present invention caches a number of N data, then drives the NB-IoT chip to operate, and forwards the data to the back end control system, which may reduce operating time of the NB-IoT chip and reduce power consumption of the entire system. The status parameters of the dock with built-in lock of the present embodiment may include the status of the locking device, a status of use, and bicycle tag data.

The present system provides the locking and parking apparatus, and by arranging the locking and parking apparatus in various places that are planned and approved by the government, the third-party shared bicycle platform may park shared bicycle thereof on multiple dock with built-in locks. Therefore, the automatic renting and returning of the bicycle on the locking and parking apparatus may be realized, so as to avoid the situation in which the bicycle is randomly parked by the user when returned. This method may realize orderly and safe parking of the shared bicycle, as well as efficient and convenient monitoring and supervising of the shared bicycles, with a lower management cost. Furthermore, after the radio frequency tag is installed on the user bicycle in the present embodiment, as long as the radio frequency tag is bound to a user account, the bicycle may be directly parked on the dock with built-in lock of the locking and parking apparatus when the user parks the bicycle, and the dock with built-in lock may read and forward the corresponding status parameters of the dock with built-in lock to the back end control system via the node computer, thereby marking a returning action of the user, which is convenient and fast.

### Embodiment three

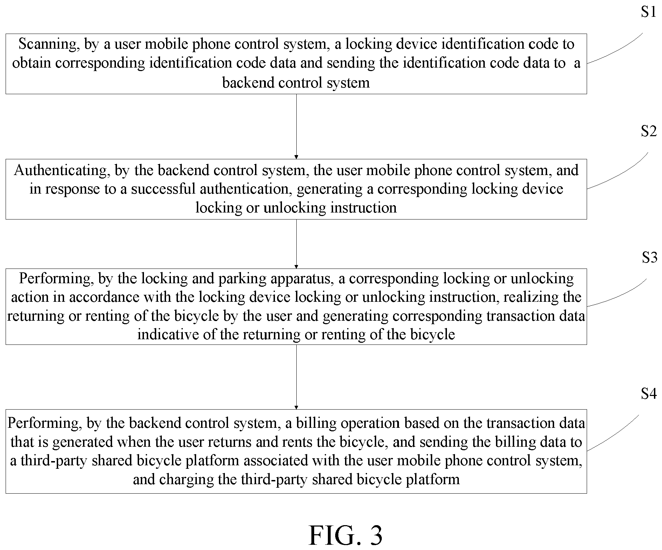

As illustrated in FIG. 3, the present embodiment is a shared bicycle parking management method based on the Internet of Things on basis of Embodiment one, and the method includes steps described below:
in step S1, the user mobile phone control system scans the locking device identification code to obtain corresponding identification code data and sends the identification code data to the back end control system;
in step S2, the user mobile phone control system is authenticated by the back end control system, and after the user mobile phone control system is successfully authenticated, a corresponding locking device locking/unlocking instruction is generated;
in step S3, the locking and parking apparatus performs a corresponding locking / unlocking action in accordance with the locking device locking / unlocking instruction, realizing the returning / renting bicycle by the user and generates corresponding transaction data indicative of the returning / renting of the bicycle, where the transaction data includes transaction times and a status of the locking device; and
in step S4, the back end control system performs a billing operation based on the transaction data which is generated when the user returns and rents the bicycle, and sends the billing data to the third-party shared bicycle platform associated with the user mobile phone control system, so as to charge the third-party shared bicycle platform.

Further as a typical embodiment, the step S2 specifically includes steps described below:
in step S21, the user mobile phone control system wakes up the dock with built-in lock via short-range wireless communication;
in step S22, the dock with built-in lock sends the status parameters of the dock with built-in lock to the user mobile phone control system via the first short-range wireless communication module;
in step S23, after analyzing the status parameters of the dock with built-in lock to obtain the status of the dock with built-in lock, the user mobile phone control system displays executable operations to the user, then generates corresponding operation request information based on the status parameters of the dock with built-in lock and the user-input operation data and sends the operation request information to the back end control system; and
in step S24, the back end control system authenticates the user mobile phone control system according to the operation request information, where after the user mobile phone control system is successfully authenticated, the back end control system generates the corresponding locking device locking / unlocking instruction, and sends the locking device locking / unlocking instruction to the corresponding dock with built-in lock via the user mobile phone control system;
where the status parameter of the dock with built-in lock includes the status of the locking device and a status of use; and
in the step S3, the transaction data is forwarded to the back end control system via the user mobile phone control system.

Further as a typical embodiment, in the step S5, after specifically calculating the total length of time during which the bicycle is rented by the user according to the transaction times in the transaction data that is generated when the user returns the bicycle and rents the bicycle, the back end control system obtains a preset billing method in conjunction with the bicycle tag data to perform the billing.

Further, after the step S4, the method further includes step S5.

In step S5, the third-party shared bicycle platform performs a corresponding billing operation on the user mobile phone control system based on the billing data sent by the back end control system.

The bicycle of the present invention includes a bicycle, an electric bicycle, and the like. The present invention may realize the orderly management for the shared bicycles of the current third-party shared bicycle platform such as Mobike, ofo, etc. In the parking management, the back end control system directly charges the third-party shared bicycle platform, and then the third-party shared bicycle platform charges the user mobile phone control system according to the billing data of the back end control system.

Further as a typical embodiment, in the step S1, the user may return / rent the bicycle from any dock with built-in lock.

A detailed shared bicycle parking management method based on the shared bicycle parking management system according to Embodiment one of the present invention is described below:
in step 1, when the user wants to rent the bicycle, the user mobile phone control system installed on the mobile phone is used to scan the locking device identification code to obtain corresponding identification code data and further send the identification code data to the back end control system;
in step 2, the user mobile phone control system is authenticated by the back end control system, and after the authentication is successful, the corresponding unlocking instruction of the locking device is generated, where the authentication here is mainly used to determine whether the user mobile phone control system is a legitimate returning user in conjunction with the corresponding parameters of the dock with built-in lock when the user returns the bicycle. Specifically, the locking device identification code when returning the bicycle may be bound to the user mobile phone control system to implement the authentication when the bicycle is later rented;
in step 3, the locking and parking apparatus is configured to perform the corresponding unlocking action according to the unlocking instruction of the locking device, realizing the renting bicycle by the user and generating corresponding transaction data indicative of the renting of the bicycle, similarly the transaction data includes transaction times and the status of the locking device;
in step 4, when the user wants to return the bicycle, the user mobile phone control system installed on the mobile phone is used to scanning the locking device identification code to obtain corresponding identification code data and send the identification code data to the back end control system;
in step S2, the user mobile phone control system is authenticated via the back end control system, and after successfully authenticated, corresponding locking instruction of the locking device is generated, where the authentication in this step is mainly used to determine whether the user mobile phone control system is a legally registered user;
in step 6, the locking and parking apparatus is configured to perform the corresponding locking action according to the locking instruction of the locking device, realizing the returning of the bicycle by the user and generating corresponding transaction data indicative of the returning of the bicycle, where the transaction data includes transaction times and the status of the locking device; and
in step 7, the back end control system is used for billing according to transaction data which is generated when the user returns and rents the bicycle, and sending the billing data to the third-party shared bicycle platform associated with the user mobile phone control system, so as to charge the third-party shared bicycle platform.
In the present embodiment, the first short-range wireless communication module is implemented as the Bluetooth communication module, therefore, the short-range communication processes are all implemented as Bluetooth communication processes.

This method may realize the user automatic renting and returning of the bicycle on the locking and parking apparatus, avoiding the situation where the bicycles are randomly parked by the user when returned. This method may realize the orderly and safe parking of the shared bicycle, and may effectively monitor and supervise shared bicycles, which is efficient, convenient, and has a low management cost.

### Embodiment four

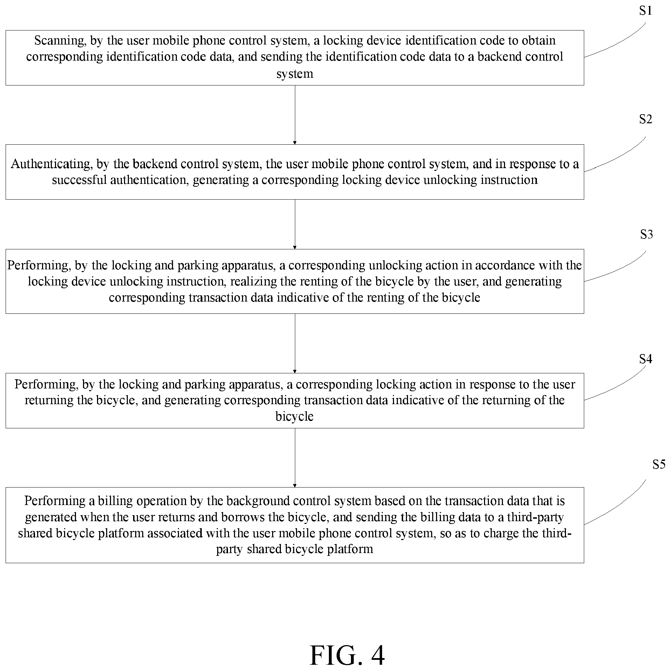

As illustrated in FIG. 4, the present embodiment is a shared bicycle parking management method based on the Internet of Things on basis of Embodiment one, and the method includes steps described below:
in step S1, the locking and parking apparatus is configured to perform the corresponding locking action when the user returns the bicycle, and generate corresponding transaction data indicative of the returning of the bicycle;
in step S2, the user mobile phone control system is used to scan the locking device identification code to obtain corresponding identification code data and send the identification code data to the back end control system;
in step S3, the user mobile phone control system is authenticated via the back end control system, and after successfully authenticated, corresponding locking instruction of the locking device is generated, where the back end control system is configured to authenticate the user mobile phone control system via the association between the bicycle tag data and the user mobile phone control system;
in step S4, the locking and parking apparatus is configured to perform the corresponding unlocking action according to the unlocking instruction of the locking device, realizing the renting of the bicycle by the user and generating corresponding transaction data indicative of the renting of the bicycle; and
in step S5, the back end control system is used for billing according to transaction data that is generated when the user returns and rents the bicycle, and sending the billing data to the third-party shared bicycle platform associated with the user mobile phone control system, so as to charge the third-party shared bicycle platform;
where transaction data includes transaction times, bicycle tag data, and the status of the locking device.

Further as a typical embodiment, the step S2 specifically includes steps described below:
in step S21, the user mobile phone control system wakes up the locking by short-range wireless communication. Specifically, when the user mobile phone control system wakes up the dock with built-in lock by short-range wireless communication, the user mobile phone control system sends the short-range wireless communication signal, such as a Bluetooth signal, to the dock with built-in lock, and when searched and obtained through broadcasting the short-range wireless communication signal sent by the user, and the dock with built-in lock is woken up. In this step, after the dock with built-in lock is woken up, the main control circuit board controls the first short-range wireless communication module to be paired with the short-range wireless communication module of the mobile phone where the user mobile phone control system is located, so as to perform corresponding operations depending on whether they are successfully paired up;
in step S22, the dock with built-in lock is configured to determine whether the first short-range wireless communication module is successfully paired with the user mobile phone control system, where if the first short-range wireless communication module is successfully paired with the user mobile phone control system, status parameters of the dock with built-in lock are directly sent to the user mobile phone control system, then step S25 is directly performed; and if the first short-range wireless communication module fails to be paired with the user mobile phone control system, step S23 is performed; and
in step S23, after the dock with built-in lock wakes up the node computer via the short-range wireless communication method, the node computer connects with the back end control system via the NB-IoT communication method, then obtains and forwards the status parameters of the dock with built-in lock to the back end control system in real time. When the node computer actively searches and obtains the short-range wireless communication signal sent by the dock with built-in lock, the node computer is woken up to start the NB-IoT chip and other components to enter the operating state. After connecting with the back end control system via the NB-IoT chip, a data transmission channel between the dock with built-in lock and the back end control systems is established without using the user mobile phone.

In the process of renting the bicycle, after waked up by the dock with built-in lock, the node computer establishes a connection with the dock with built-in lock, and buffers the status parameters of the dock with built-in lock sent by the lock post. Meanwhile, the node computer sends the buffered status parameters of the dock with built-in lock to the back end control system in real time, resulting in timely data transmission, and the data transmission may be performed in time to achieve unlocking and renting of the bicycle.

In step S24, after obtaining the status parameters of the dock with built-in lock forwarded by the node computer, the back end control system is configured to forward the status parameters of the dock with built-in lock to the corresponding user mobile phone control system;
in step S25, after analyzing the status parameters of the dock with built-in lock to obtain the status of the dock with built-in lock, the user mobile phone control system is configured to display executable operations to the user, then generate corresponding operation request information based on the status parameters of the dock with built-in lock and the user-input operation data and send the operation request information to the back end control system. Specifically, after analyzing the status parameters of the dock with built-in lock to obtain the status of the dock with built-in lock, the user mobile phone control system is configured to display executable operations to the user, then generate corresponding operation request information based on the user-input operation data and further send the operation request information together with the user account information to the back end control system; and
in step S26, the back end control system is configured to authenticate the user mobile phone control system according to the operation request information, where after the user mobile phone control system is successfully authenticated, the back end control system is configured to generate the corresponding unlocking instruction of the locking device, and send the unlocking instruction of the locking device to the dock with built-in lock;
where the status parameter of the dock with built-in lock includes the status of the locking device, a status of use, and bicycle tag data.

Further as a typical embodiment, in the step S4, the generated transaction data indicating for returning the bicycle is sent to the back end control system in the following manner:
after waking up the node computer via short-range wireless communication, the dock with built-in lock is configured to send the transaction data to the node computer for buffering, where after determining that the amount of buffered data has reached the preset number N, the node computer is configured to send the buffered transaction data to the back end control system via the NB-IoT communication method;
in the step S3, the generated transaction data indicating for renting the bicycle is sent to the back end control system in the following manner:
   in response to the dock with built-in lock determining that the first short-range wireless communication module is successfully paired with the user mobile phone control system, the transaction data is forwarded to the back end control system in real time via the successfully paired user mobile phone control system;
   in response to the dock with built-in lock determining that the first short-range wireless communication module fails to be paired with the user mobile phone control system, the transaction data is sent to the node computer for buffering, and the node computer forwards the buffered transaction data to the back end control system in real time via the NB-IoT communication method.

In a process of transmitting the transaction data generated when the bicycle is rented, after waked up by the dock with built-in lock, the node computer establishes a connection with the dock with built-in lock, and buffers the data sent by the dock with built-in lock, then after determining that a number of buffered data reaches a preset number N, the node computer connects with the back end control system via the NB-IoT communication method, and sends the number of N buffered data to the back end control system together. When the node computer of the present invention buffers a number of N data, and drives the NB-IoT chip to operate, and forwards the transaction data to the back end control system, which may reduce operating time of the NB-IoT chip and reduce power consumption of the entire system. When the bicycle is rented, the node computer exchanges data with the dock with built-in lock having data changes, and waiting for a plurality of pieces of data to be buffered, and then uploading the plurality of buffered data to the back end control system via the NB-IoT chip is an extremely efficient method and is a power saving strategy. This model makes it possible to maintain the system running for several years with batteries.

Further as a typical embodiment, in the step S5, after specifically calculating the total length of time during which the bicycle is rented by the user according to the transaction times in the transaction data when the user returns the bicycle and rents the bicycle, the back end control system obtains the preset billing method in conjunction with the bicycle tag data to perform the billing.

Further as a typical embodiment, after step S5, the method further includes step S6 described below:
in step S6, the third-party shared bicycle platform is configured to perform a corresponding billing operation on the user mobile phone control system according to billing data sent by the back end control system.

Further as a typical embodiment, in the case where the dock with built-in lock determines that the first short-range wireless communication module is successfully paired with the user mobile phone control system, the step S3 specifically includes steps described below:
in step S301, the main control circuit board controls the locking device to perform the corresponding unlocking action in accordance with the unlocking instruction of the locking device sent by the user mobile phone control system, and generates the corresponding transaction data indicative of the renting of the bicycle and further sends the transaction data to the user mobile phone control system;
in the step S302, the user mobile phone control system sends the transaction data to the back end control system.

A detailed shared bicycle parking management method based on the shared bicycle parking management system according to Embodiment two of the present invention is described below:
in step 1, a radio frequency tag is issued for identifying the bicycle to the bicycle owned by the third-party shared bicycle platform, and the radio frequency tag is installed on a shared bicycle to realize identification of the shared bicycle;
in step 2, when the user wants to rent the bicycle, the user mobile phone control system installed on the mobile phone is used to scan the locking device identification code to obtain corresponding identification code data and further send the identification code data to the back end control system;
in step S3, the user mobile phone control system is authenticated via the back end control system, and after the user mobile phone control system is successfully authenticated, corresponding locking instruction of the locking device is generated, where the authentication herein is judged by a binding relationship between the user mobile phone control system and the bicycle tag data, and the user mobile phone control system is authenticated by the transaction data previously generated by the dock with built-in lock;
in step 4, the locking and parking apparatus is configured to perform the corresponding unlocking action according to the unlocking instruction of the locking device, realizing the renting of the bicycle by the user and generating corresponding transaction data indicative of the renting of the bicycle, similarly the transaction data includes transaction times, the bicycle tag data, and the status of the locking device;
in step 5, when the user wants to return the bicycle, the bicycle may be directly parked on the dock with built-in lock of the locking and parking apparatus, realizing the returning of the bicycle by the user and generating corresponding transaction data indicative of the returning of the bicycle, where the transaction data includes transaction times, the bicycle tag data, and the status of the locking device;
in step 6, the back end control system is used for billing according to transaction data that is generated when the user returns and rents the bicycle, and sends the billing data to the third-party shared bicycle platform associated with the user mobile phone control system, so as to charge the third-party shared bicycle platform; and
in step 7, for different bicycle tag data, the back end control system obtains corresponding status parameters of the dock with built-in lock, and then obtains and sends a path of travel of the bicycle corresponding to the bicycle tag data to the corresponding user mobile phone control system for display. This method may be used for users to be aware of their own paths of travel, used as a record of daily life, used for parents to be aware of the scope of activities by their children, and also used as a basis for tracking when it is needed.

In the present embodiment, both the first short-range wireless communication module and the second short-range wireless communication module are implemented as the Bluetooth communication module, therefore, the short-range communication processes are both implemented as Bluetooth communication processes.

This method may realize the user automatic renting and returning of the bicycle on the locking and parking apparatus, avoiding the situation where the bicycles are randomly parked by the user when returned. This method may realize the orderly and safe parking of the shared bicycle, and may effectively monitor and supervise shared bicycles, which is efficient, convenient, and has a management cost.

The foregoing provides a detailed description of typical embodiments of the present invention, but the present invention will not be limited to the described embodiments. Those having ordinary skill in the art will be able to make various equivalent transformations or replacements without departing from the spirit of the present invention, where these equivalent transformations or replacements shall all fall in the scope defined by the claims appended to this application.

## Claims

1. A shared bicycle parking management system based on Internet of Things, comprising a back end control system, a user mobile phone control system, and a plurality of locking and parking apparatuses, each of which is provided with at least one dock with built-in lock, wherein the dock with built-in lock comprises a dock body, a locking device installed on the dock body, a locking device identification code adhered to the dock body, and a main control circuit board and a first short-range wireless communication module that are arranged in the dock body, wherein the locking device and the first short-range wireless communication module are both coupled to the main control circuit board, the back end control system is coupled to the user mobile phone control system via wireless communication, and the user mobile phone control system is associated with a third-party shared bicycle platform;
wherein the user mobile phone control system is configured to scan the locking device identification code to obtain corresponding identification code data and further send the identification code data to the back end control system;
wherein each of the plurality of locking and parking apparatuses is configured to perform a corresponding locking or unlocking action in response to a user returning or renting a bicycle, and configured to generate corresponding transaction data indicative of the returning or renting of the bicycle, the transaction data comprising transaction times, bicycle tag data, and a status of the locking device;
wherein the back end control system is configured for authenticating the user mobile phone control system, and is further configured for billing based on the transaction data generated when the user returns and rents the bicycle, and is further configured to send the billing data to the third-party shared bicycle platform associated with the user mobile phone control system, so as to charge the third-party shared bicycle platform.

2. The shared bicycle parking management system according to claim 1, further comprising a radio frequency tag arranged on a user bicycle and a radio frequency identification module arranged on the dock body, wherein the radio frequency identification module is coupled to the main control circuit board, wherein each of the plurality of locking and parking apparatuses is further provided with a node computer, which is provided with a Narrow Band Internet of Things (NB-IoT) chip and a second short-range wireless communication module, wherein the node computer is coupled to the back end control system via the NB-IoT chip, and is wirelessly connected to the first short-range wireless communication module via the second short-range wireless communication module, achieving its connection with the main control circuit board of each dock with built-in lock of the locking and parking apparatus.

3. The shared bicycle parking management system according to claim 2, wherein the first short-range wireless communication module and the second short-range wireless communication module are each implemented as a Bluetooth communication module, the radio frequency tag is implemented as a radio frequency identification (RFID) tag, and the radio frequency identification module is implemented as an RFID identifier.

4. A shared bicycle parking management method based on Internet of Things, comprising the following operations:
S1, scanning, with a user mobile phone control system, a locking device identification code to obtain corresponding identification code data, and sending the identification code data to a back end control system;
S2, authenticating, by the back end control system, the user mobile phone control system, and generating a corresponding locking device locking or unlocking instruction in response to a successful authentication;
S3, performing, by the locking and parking apparatus, a corresponding locking or unlocking action in accordance with the locking device locking or unlocking instruction, achieving the returning or renting of the bicycle by the user, and generating corresponding transaction data indicative of the returning or renting of the bicycle, the transaction data comprising transaction times, and a status of the locking device; and
S4, performing a billing operation, by the back end control system based on the transaction data generated when the user returns and rents the bicycle, and sending the billing data to a third-party shared bicycle platform associated with the user mobile phone control system, so as to charge the third-party shared bicycle platform.

5. The shared bicycle parking management method according to claim 4, wherein the operation S2 comprises:
S21, waking up a dock with built-in lock by the user mobile phone control system via short-range wireless communication;
S22, sending, by the dock with built-in lock, status parameters of the dock with built-in lock to the user mobile phone control system via a first short-range wireless communication module;
S23, analyzing, by the user mobile phone control system, the status parameters of the dock with built-in lock to obtain the status of the dock with built-in lock and displaying executable operations to the user, and further generating corresponding operation request information based on the status parameters of the dock with built-in lock and the user-input operation data and sending the operation request information to the back end control system; and
S24, authenticating, by the back end control system, the user mobile phone control system based on the operation request information, and in response to a successful authentication, generating a corresponding locking device locking or unlocking instruction and sending the locking device locking or unlocking instruction to the corresponding dock with built-in lock via the user mobile phone control system;
wherein the status parameters of the dock with built-in lock comprise the status of the locking device and a status of use; and
wherein in S3, the transaction data is forwarded to the back end control system via the user mobile phone control system.

6. The shared bicycle parking management method according to claim 4, further comprising the following operation subsequent to S4:
S5, performing, by the third-party shared bicycle platform, a corresponding billing operation on the user mobile phone control system based on the billing data sent by the back end control system.

7. A shared bicycle parking management method based on Internet of Things, comprising the following operations:
S1, scanning, by a user mobile phone control system, a locking device identification code to obtain corresponding identification code data and sending the identification code data to a back end control system;
S2, authenticating, by the back end control system, the user mobile phone control system, and generating a corresponding locking device unlocking instruction in response to a successful authentication;
S3performing, by a locking and parking apparatus, a corresponding unlocking action in accordance with the locking device locking or unlocking instruction, achieving the renting of the bicycle by the user, and generating corresponding transaction data indicative of the renting of the bicycle;
S4, performing, by the locking and parking apparatus, a corresponding locking action in response to the user returning the bicycle, and generating corresponding transaction data indicative of the returning of the bicycle; and
S5, performing, by the back end control system, a billing operation based on the transaction data generated when the user returns and rents the bicycle, and sending the billing data to a third-party shared bicycle platform associated with the user mobile phone control system, so as to charge the third-party shared bicycle platform;
wherein transaction data comprises transaction times, bicycle tag data, and a status of the locking device.

8. The shared bicycle parking management method according to claim 7, wherein S2 comprises:
S21, waking up a dock with built-in lock by the user mobile phone control system via short-range wireless communication;
S22, determining, by the dock with built-in lock, whether a first short-range wireless communication module is successfully paired with the user mobile phone control system, and in response to determining that the first short-range wireless communication module is successfully paired with the user mobile phone control system, directly sending the status parameters of the dock with built-in lock to the user mobile phone control system, and turning to S25; and in response to determining that the first short-range wireless communication module fails to be paired with the user mobile phone control system, turning to S23;
S23, after the dock with built-in lock wakes up a node computer via short-range wireless communication, connecting, by the node computer, with the back end control system via Narrow Band Internet of Things (NB-IoT) communication, and further obtaining the status parameters of the dock with built-in lock and forwarding the status parameters of the dock with built-in lock to the back end control system in real time;
S24, in response to obtaining the status parameters of the dock with built-in lock forwarded by the node computer, forwarding, by the back end control system, the status parameters of the dock with built-in lock to the corresponding user mobile phone control system;
S25, analyzing, by the mobile phone control system, the status parameters of the dock with built-in lock to obtain the status of the dock with built-in lock, displaying executable operation to the user, and further generating corresponding operation request information based on the status parameters of the dock with built-in lock and the user-input operation data and further sending the operation request information to the back end control system; and
S26, authenticating, by the back end control system, the user mobile phone control system based on the operation request information, and in response to a successful authentication, the generating, by back end control system, a corresponding locking device unlocking instruction and sending the locking device unlocking instruction to the dock with built-in lock;
wherein the status parameters of the dock with built-in lock comprise the status of the locking device, a status of use, and bicycle tag data.

9. The shared bicycle parking management method according to claim 8, wherein S4, the generated transaction data indicative of the returning of the bicycle is sent to the back end control system in the following manner:
after waking up the node computer via short-range wireless communication, the dock with built-in lock sends the transaction data to the node computer for buffering, and after determining that an amount of buffered data has reached a preset number N, the node computer sends the buffered transaction data to the back end control system via the NB-IoT communication;
wherein in S3, the generated transaction data indicative of the renting of the bicycle is sent to the back end control system in the following manner:
in response to the dock with built-in lock determining that the first short-range wireless communication module is successfully paired with the user mobile phone control system, the transaction data is forwarded to the back end control system in real time via the successfully paired user mobile phone control system;
in response to the dock with built-in lock determining that the first short-range wireless communication module fails to be paired with the user mobile phone control system, the transaction data is sent to the node computer for buffering, and the node computer forwards the buffered transaction data to the back end control system in real time via the NB-IoT communication.

10. The shared bicycle parking management method according to claim 7, further comprising the following operation subsequent to S5:
S6, performing, by the third-party shared bicycle platform, a corresponding billing operation on the user mobile phone control system in accordance with the billing data sent by the back end control system.
